# EUROPÄISCHE PATENTSCHRIFT

(11) **EP 1 046 007 B1**
(45) Veröffentlichungstag und Bekanntmachung des Hinweises auf die Patenterteilung: **20.03.2002**
(21) Anmeldenummer: 98965834.9
(22) Anmeldetag: 14.12.1998
(51) Int. Cl.: F16L 47/02, B29C 65/34

(54) **SCHELLE AUS THERMISCH SCHWEISSFÄHIGEM MATERIAL FÜR LEITUNGSROHRE**
THERMOWELDABLE CLIP FOR CONDUITS
BRIDE EN MATERIAU THERMOSOUDABLE POUR TUYAUX DE CONDUITE

(30) Priorität: 20.12.1997 DE 29722603 U
(43) Veröffentlichungstag der Anmeldung: 25.10.2000
(73) Patentinhaber: MANIBS Spezialarmaturen GmbH & Co. KG, D-42859 Remscheid (DE)
(72) Erfinder: HINTZEN, Werner, D-50765 Köln (DE)
(74) Vertreter: Mentzel, Norbert, Dipl.-Phys.
(86) Internationale Anmeldenummer: EP9808195
(87) Internationale Veröffentlichungsnummer: WO9932824

(56) Entgegenhaltungen:
- CH-A- 652 473
- DE-A- 19 644 055
- DE-C- 19 519 341
- DE-U- 29 616 864

## Beschreibung

Die Erfindung richtet sich auf eine Schelle der im Oberbegriff des Anspruches 1 angegebenen Art. Man verwendet z.B. derartige Schellen, zu Reparaturzwecken oder um nachträglich in einem bereits verlegten, unter Mediendruck stehenden Leitungsrohr eine Abzweigleitung anzuschließen. Im letzteren Fall verwendet man Schellen, die mindestens an einem ihrer um das Leitungsrohr herumgelegten, zylinderförmigen Schalen einen Rohrabgang aufweisen. Dieser Rohrabgang dient zunächst zum Anbohren des Leitungsrohres, dann aber auch zur Medienführung an die an den Rohrabgang angeschlossene Abzweigleitung. Im erstgenannten Fall, wo ein Leitungsrohr eine defekte Stelle aufweist, wird, zwecks Reparatur, eine Schelle aus Schalen ohne Rohrabgang um das Leitungsrohr herumgelegt.

Bei einer bekannten Schelle dieser Art (DE 295 12 309 U1) sind die Innenflächen der beiden Schalen mit Windungen eines Leiters belegt, wobei lediglich jene Kreiszonen, an denen ein Rohrabgang vorgesehen ist, ausgespart bleiben. Der Leiter ist ein Draht, dessen Windungen aus parallelen linearen Windungsschenkeln und sie paarweise verbindenden Windungsbögen besteht. Die großen Längen des Leiters erfordern großen elektrischen Energieaufwand zum Abschmelzen der Kontaktflächen. In dem großen zu verschmelzenden Kontaktbereich können an vielen Stellen Störungen eintreten, die zu Undichtigkeiten führen. Bei dieser bekannten Schelle sind die beiden Schalen zueinander unterschiedlich gestaltet, es gibt Wandbereiche. die sich überlappen. Das erfordert unterschiedliche Formteile zur Herstellung der beiden Schalen und eine entsprechend unübersichtliche Lagerhaltung und Verarbeitung.

Der Nachteil einer unterschiedlichen Gestaltung der Schalen zur Bildung einer Schelle haftet auch der den Gattungsbegriff des Patentanspruchs 1 bildenden Lösung gemäß der DE 195 19 341 C1 an. Denn auch bei dieser vorbekannten Lösung kommt eine unterschiedliche Gestaltung der Schalen dadurch zustande, daß die Längsflansche nur einer Schale mit jeweils einer Heizwicklung versehen ist.

Gleichgestaltete Schalen offenbart zwar die vorbekannte CH 652 473 A, bei der jedoch die Heizwicklung als separater, mit keiner Schale verbundenes Bauteil gestaltet ist. Zwecks Anordnung der Heizwicklung zwischen Schalen und Rohr müssen die Innenflächen der Schalen einen der Heizwicklung entsprechenden Abstand von der Rohroberfläche aufweisen. Außerdem ist zur Materialauffüllung dieses Zwischenraumes der Heizdraht der Heizwicklung mit Kunststoff ummantelt, der infolge Aufschmelzens den Zwischenraum ausfüllt und eine Verbindung mit Rohr und Schale eingeht.

Der Erfindung liegt die Aufgabe zugrunde, eine zuverlässige Schelle zu entwickeln, die aus zwei gleichgestalteten Schalen zusammengesetzt werden kann und die mit geringem Material- und Energieaufwand eine mediendichte Verbindung zwischen der Schelle und dem Leitungsrohr gewährleistet. Dies wird erfindungsgemäß durch die im Kennzeichen des Anspruches 1 angeführten Maßnahmen erreicht, denen folgende besondere Bedeutung zukommt.

Die Erfindung hat zunächst erkannt, dass es genügt, in den beiden Endbereichen der Schale verhältnismäßig kleine Halbringzonen mit Windungen zu belegen, wenn man außerdem nur an der Innenfläche des einen Längsflansches den Leiter in Form eines ebenen Bandes anordnet, der die beiden Halbringzonen miteinander verbindet. Das mittlere Feld der Schalen bleibt dabei von einem Heizleiter frei. Der Energieaufwand für das Verschweißen lässt sich erheblich verringern, wenn man den Leiter mit einem Teil seines Querschnitts aus der Kontaktfläche der schalenseitigen Halbringzonen bzw. des längsflanschseitigen Bandes herausragen lässt. Die geringen Bereiche in der Schelle, wo nur verschweißt zu werden braucht, können mit verhältnismäßig geringer Heizenergie erwärmt werden. Weil beide Schalen identisch ausgebildet sind, können sie in gewendeter Position paarweise miteinander kombiniert werden. Dadurch ergibt sich eine allseitige axiale und radiale Verbindung zwischen den beiden Schalen.

Besonders vorteilhaft ist es für die erwähnte Anordnung des Leiters diesen in Form eines Mäanders vorzuformen, womit man einen Heizstrang erhält, der an den genannten Stellen der Schaleninnenfläche bzw. am Längsflansch in Windungen verläuft. Der in Windungen verlegte Mäander liegt mit seiner Breitseite an der Kontaktfläche, so daß sein Leiter zuverlässig mit einem Teil seines Querschnitts aus der Kontaktfläche herausragt.

Weitere Maßnahmen und Vorteile der Erfindung sind aus den übrigen Ansprüchen, der nachfolgenden Beschreibung und den Zeichnungen entnehmbar. In den Zeichnungen ist die Erfindung in einem Ausführungsbeispiel dargestellt. Es zeigen:
- Fig. 1,: in perspektivischer Darstellung, die Innenansicht der einen Schale der Schelle nach der Erfindung,
- Fig. 2,: in Vergrößerung, ein Teilstück aus der zu verschweißenden Kontaktfläche der Schellen von Fig. 1, und
- Fig. 3,: schematisch, einen Querschnitt durch eine zu verschweißende Kontaktfläche der Schelle von Fig. 1 in Schnittrichtung der Schnittlinie III - III von Fig. 2.

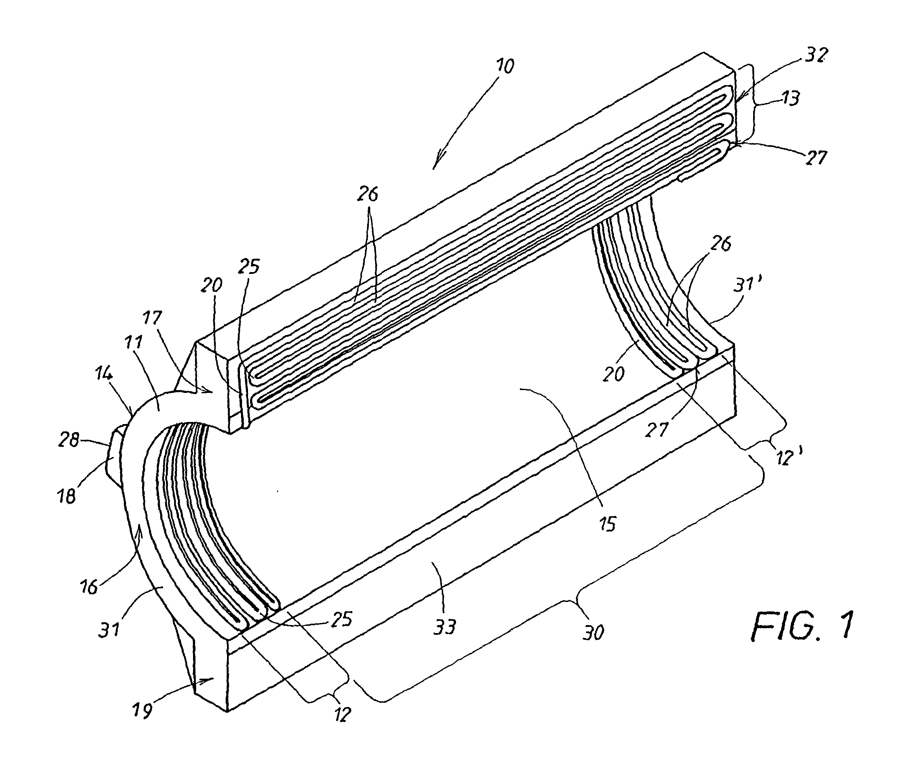

Die Erfindung richtet sich auf eine aus zwei Schalen 10 bestehenden Schelle, die aus thermisch schweißfähigem Material 11 besteht. Abgesehen von einem eventuellen Rohrabgang haben beide Schalen 10 ein übereinstimmendes. Aussehen, weshalb es genügt, lediglich die eine Schale gemäß Fig. 1 näher zu beschreiben.

Die Schale 10 umfasst außer dem Schalenkörper aus thermoplastischem Material 11, das bereichsweise mehrschichtig aufgebaut sein kann, auch noch einen besonderen Heizleiterstrang 20, der als Vorprodukt aus einem elektrischen Leiter 21, nämlich vorzugsweise einem metallischen Draht erzeugt wird. Der Leiter 21 besteht hier aus einem Draht mit Kreisquerschnitt 22. Der Heizdraht 21 wird zunächst in die Form eines ebenen Mäanders gebracht, der einen ebenen Streifen mit einer Breite 24 entsprechend der Weite der Mäanderlegungen aufweist. Wenn nachfolgend von einem "Heizstrang" gesprochen wird, soll damit stets der vorerwähnte Mäander 23 aus dem Leiter 21 gemeint sein.

Dieser Heizstrang 20 ist an definierten Stellen 12, 12', 13 in Windungen 25 verlegt, deren mäanderförmiger Aufbau in Fig. 1 nicht näher gezeigt ist. Die Windungen bestehen dabei im Wesentlichen aus linearen Windungsschenkeln 26, die an ihren Enden mit Windungsbögen 27 paarweise verbunden sind. Dieser Windungsverlauf wird zweckmäßigerweise in einer vorab herzustellenden sogenannten "Heizmatte" festgelegt. In dieser Heizmatte können die Windungen 25 durch eine Kunststofflage zueinander festgelegt sein. Der Leiter 21 durchläuft die Heizmatte in einem durchgehenden, in sich mäanderförmigen Zug und seine beiden Leiterenden können gestreckt verlaufen, um in folgender Weise mit Kontakten verbunden zu werden.

Eine solche vorgefertigte Heizmatte oder aber ein in noch näher zu beschreibenden Windungen 25 zu verlegender Heizstrang 20 wird in eine Spritzgußform gebracht, die zur Herstellung der Schale 10 dient. Die Heizmatte bzw. der Heizstrang 20 kommen dabei an der künftigen Kontaktfläche der Schale 10 an den bereits erwähnten Stellen 12, 12', 13 zu liegen, deren Position noch näher beschrieben werden wird. Die beiden Enden des Leiters 21 werden dabei mit elektrischen Anschlüssen 28 verbunden, die an der künftigen Außenseite 14 der zu spritzgießenden Schale zu liegen kommen. Dann wird in die Spritzgußform das Material 11 eingeführt, das sich ggf. mit dem Kunststoffmaterial der vorausgehend eingelegten Heizmatte verbindet und das aus Fig. 1 ersichtliche Kunststoff-Metall-Produkt 10 entsteht. Dieses Kunststoff-Metall-produkt umfasst einen Halbrohrteil 16, an dessen Längsrändern zwei Längsflansche 17, 19 angeformt sind. Zwecks elektrischer Isolation der vorerwähnten, mit den Leiterenden verbundenen Anschlüsse 28 wird an der Außenseite 14 der Schale 10 eine Kontakthülse 18 angeformt, wo bei dem Schweißvorgang später elektrische Gegenkontakte einer Stromquelle eines Schweißgerätes angeschlossen werden.

Ausweislich der Fig. 1 sind bei der Erfindung die Windungen 25 nur in schmalen Zonen 12 bzw. 12' in den beiden Endbereichen 31 und 31' des Halbrohrteils 16 der Schale 10 vorgesehen. Es befinden sich dort je eine Halbringzone 12, 12' an der Schaleninnenfläche 15. In der dazwischenliegenden Innenflächenzone 30 der Schale 10 sind dagegen keine elektrischen Leiter vorgesehen. Deswegen kann hier ohne weiteres bedarfsweise ein Rohrabgang in den vorerwähnten Halbrohrteil 16 der Schale 10 eingebracht werden.

Der Heizstrang 20 verläuft in den beiden Halbringzonen 12, 12' mit seinen Windungsschenkeln 26 in zueinander parallelen Radialebenen, wie Fig. 1 erkennen lässt. Die Windungsbögen 27 kommen damit in den Kantenübergängen zwischen der Schaleninnenfläche 15 und den Innenflächen 32, 33 der beiden Längsflansche 17, 19 zu liegen. Man könnte in diesen Zonen aber auch Ringteile vorsehen, welche diese Innenflächen 32, 33 stellenweise überragen. Dazu gibt es komplementäre Ringteilaufnahmen in den jeweiligen Gegenschalen, in welche die Ringteile im Gebrauchsfall formschlüssig eingreifen.

Der Heizstrang 20 verläuft im Abstandsbereich zwischen den beiden Halbringzonen 12, 12' nur an der einen Innenfläche 32 des einen Längsflansches 17, während die Innenfläche 33 des gegenüberliegenden Längsflansches 19 leer ist. Der Strang 20 ist an dieser Innenfläche 32 in Form eines ebenen Bandes 13 ausgebildet. In diesem Fall sind die Windungsschenkel 26 achsparallel angeordnet und die sie paarweise verbindenden Windungsbögen 27 sind an den beiden Stirnenden 31, 31' der Schale 10 zugekehrt.

Wie bereits erwähnt wurde, werden zwei im Wesentlichen übereinstimmende Schalen 10 zum Aufbau einer erfindungsgemäßen Schelle genutzt. Diese beiden Schalen werden aber in zueinander gewendeter Position um das mit der Schelle zu versehende, nicht näher gezeigte Leitungsrohr herumgelegt. Im Gebrauchsfall werden dann die beiden Schalen gegeneinander gedrückt, was durch Schraubmittel, wie Bolzen und Muttern, zwischen den beiden paarweise einander zugekehrten Längsflanschen 17, 19 der beiden Schalen zustande kommt. Dann wird über das bei 28 angeschlossene Schweißgerät ein elektrischer Strom in die Windungen des Heizstrangs 20 geleitet. Durch die dann erfolgte Erwärmung des Leiters kommt es einerseits in den Halbringzonen 12, 12' zu einer Verflüssigung und einem Ineinanderfließen vom Kunststoffmaterial 11 der Schelle 10 mit dem aus ebenfalls schweißfähigem Material bestehenden Leitungsrohr. Andererseits passiert Analoges aus dem Kunststoffmaterial an den beiden komplementären Innenflächen 32 und 33 der Längsflansche 17, 19 von den beiden in gewendeter Weise gegeneinander gedrückten Schalen 10. Nach der Verfestigung des geschmolzenen Materials kommt es zu einer einwandfreien Verbindung, wobei geringe Energiemengen in den Zonen 12, 12' und 13 genügen.

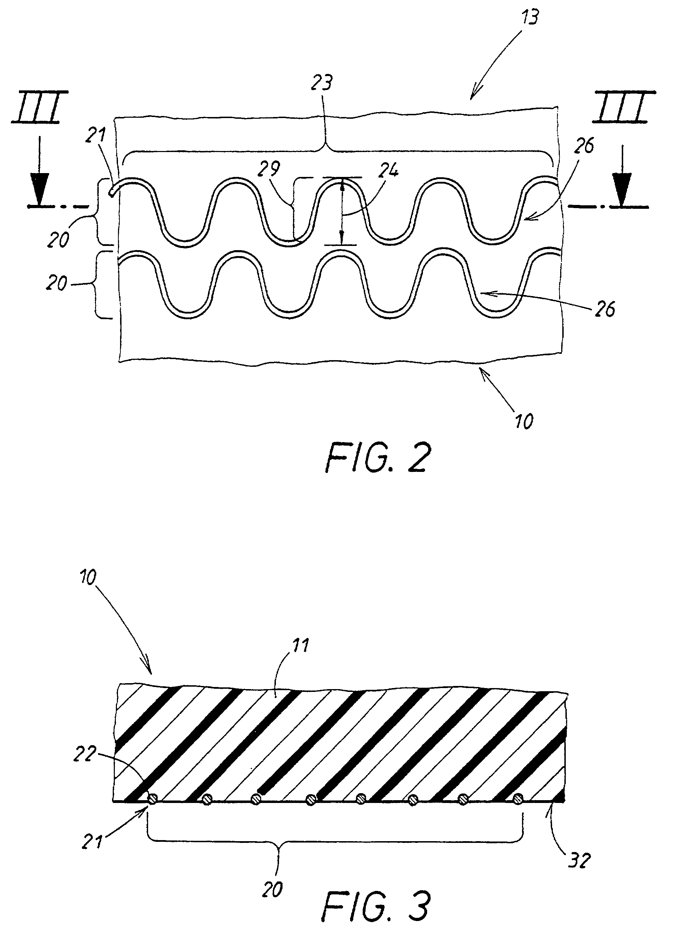

Wie der Ausbruch aus einem Flächenbereich bei 12, 12' bzw. 13 zeigt, ist der mäanderförmige Heizstrang 20 in benachbarten Windungsschenkeln 26 so dicht gesetzt, dass die Mäanderbögen sehr nahe nebeneinander zu liegen kommen und sich ggf. sogar in den Mäanderlücken des benachbarten Heizstrangs 20 hinein erstrecken können. Die Anordnung ist in jedem Fall so getroffen, dass die eine Breitseite 29 des Mäanders 23 mindestens die spätere Kontaktfläche 32 bei 13 bzw. 15 bei 12, 12' berührt, wie es in Fig. 3 verdeutlicht ist. Der Heizdraht 21 - wie Fig. 3 lehrt - ragt mit einem Teil seines Querschnitts 22 aus dieser Kontaktfläche 32 heraus. Die Mäanderlegung 23 im Heizstrang 20 erlaubt eine solche reliefartige Anordnung des Leiters 21 an der Oberfläche, weil dadurch ein ausreichender Formschluß zwischen dem Draht 21 und dem Kunststoffmaterial 11 gegeben ist.

## Patentansprüche

1. Schelle aus thermisch schweißfähigem Material (11) für ein ebenfalls aus schweißfähigem Material bestehendes Leitungsrohr, wie eine Reparaturschelle, die aus mindestens zwei das Leitungsrohr im Gebrauchsfall umschließenden Schalen (10) besteht, von denen gegebenenfalls eine einen Rohrabgang aufweist, und die Schalen (10) im Gebrauchsfall einander paarweise zugekehrte Längsflansche (17, 19) aufweisen, die unter Druck aneinander befestigbar sind, wobei die Schalen (10) wenigstens einen in Windungen (25) angeordneten, durchgehenden, elektrisch aufheizbaren Leiter (21) an ihren Innenflächen (15) aufweisen, und die Windungen (25) des Leiters (21) einerseits an den Schaleninnenflächen (15) nur in je einer Halbringzone (12, 12') in den beiden Endbereichen (31, 31') der Schale (30) verlaufen, und andererseits auch zwischen diesen beiden Halbringzonen (12, 12') in einem ebenen Band (13) verlaufen,
**dadurch gekennzeichnet**,
daβ die Schalen (10) hinsichtlich ihrer Form und der Anordnung des Leiters (21) gleich bzw. identisch ausgebildet sind, und bei paarweiser Nutzung der Schalen (10) in der Schelle in zueinander gewendeter Position liegen, und das Band (13) nur an der Innenfläche (32) des einen Längsflansches (17) angeordnet ist, und elektrische Anschlüsse (18, 28) vorhanden sind, die an der Außenseite (14) jeder Schale (10) angeformt sind, wobei der Leiter (21) mit einem Teil seines Querschnitts (22) aus der Kontaktfläche (15, 32) der schalenseitigen Halbringzonen (12, 12') bzw. des längsflanschseitigen Bandes (13) herausragt, und ein Formschluß zwischen dem Leiter (21) und dem Material der Schale (10) gegeben ist.

2. Schelle nach Anspruch 1, **dadurch gekennzeichnet, dass** der Leiter (21) in Form eines ebenen Mäanders (23) vorgeformt ist und einen mäanderförmigen Heizstrang (20) bildet, der in den schalenseitigen Halbringzonen (12, 12') und dem längsflanschseitigen Band (13) in Windungen (25) verläuft, wobei der Mäander (23) mit seiner einen Breitseite (29) in den Kontaktflächen (15, 52) angeordnet liegt.

3. Schelle nach Anspruch 1, **dadurch gekennzeichnet, dass** der mäanderförmige Heizstrang (20) in Windungen (25) verlegt und dann in ein Vorprodukt aus Kunststoff integriert ist, wobei dieses Vorprodukt an der Schaleninnenfläche (15) und an der Innenfläche (32) des einen Längsflansches (17) angeordnet wird und sich bei der Herstellung der Schale (10) mit dem Kunststoff (11) der Schale untrennbar verbindet.

4. Schelle nach Anspruch 2 oder 3, **dadurch gekennzeichnet, dass** die Windungen (25) des Heizstrangs (20) aus im Wesentlichen linearen Windungsschenkeln (26) und aus benachbarte Windungsschenkel (26) verbindenden Windungsbögen (27) bestehen, wobei die Wirdungsschenkel (26) in der Halbringzone (12, 12`) in parallelen Radialebenen verlaufen, während die Windungsschenkel (26) im Längsflansch (17) in einer gemeinsamen Axialebene angeordnet sind.

## Claims

1. Clip of thermoweldable material (11) for a conduit also comprised of weldable material, such as a repair clip, comprised of at least two shells (10) surrounding the conduit in the position of use, of which optionally at least one has a branch pipe, and wherein the shells (10) have longitudinal flanges (17, 19) facing one another in pairs in the position of use, which can be connected to one another under pressure, wherein the shells (10) have at least one electrically heatable conductor (21) arranged in continuous windings (25) at its inner surfaces (15), and wherein the windings (25) of the conductor (21) extend, on the one hand, only in a semi-circular zone (12, 12') at the inner surfaces (15) in the two end areas (31, 31') of the shell (30), respectively, and, on the other hand, extend also between these two semi-circular zones (12, 12') in a planar strip (13),
**characterized in that**
the shells (10) with respect to their shape and the arrangement of the conductor (21) are the same or identical, and for a paired use of the shells (10) in the clip are positioned so as to face one another, wherein the band (13) is arranged only at the inner surface (32) of one of the longitudinal flanges (17), and electrical terminals (18, 28) are provided which are formed integrally on the outer side (14) of each shell (10), wherein the conductor (21) projects with a part of its cross-section (22) from the contact surface (15, 32) of the semi-circular zones (12, 12') on the shell or the strip (13) on the longitudinal flange, and a positive locking connection is provided between the conductor (21) and the material of the shell (10).

2. Clip according to claim 1, **characterized in that** the conductor (21) is pre-shaped in a planar meandrous shape (23) and forms a meandrous heating element (20), which extends in windings (25) within the semi-circular zones (12, 12') on the shells as well as within the strip (13) on the longitudinal flange, wherein the meandrous shape (23) is arranged with one of its broad sides (29) in the contact surfaces (15, 52).

3. Clip according to claim 1, **characterized in that** the meandrous heating element (20) is positioned in windings (25) and is then integrated into a pre-product of plastic material, wherein this pre-product is arranged on the inner surface (15) of the shell and on the inner surface (32) of one of the longitudinal flanges (17) and is inseparably connected with the plastic material (11) of the shell during manufacture of the shell (10).

4. Clip according to claim 2 or 3, **characterized in that** the windings (25) of the heating element (20) are comprised of substantially linear winding legs (26) and of winding arches (27) connecting neighboring winding legs (26), wherein the winding legs (26) extend on the semi-circular zone (12, 12') in parallel radial planes, while the winding legs (26) on the longitudinal flange (17) are arranged in a common axial plane.

## Revendications

1. Bride en matériau thermosoudable (11) pour un tuyau de conduite en matériau lui aussi thermosoudable, telle qu'une bride de réparation, comprenant au moins deux coquilles (10) enveloppant le tuyau de conduite pendant son utilisation, coquille dont l'une présentant le cas échéant un départ de conduite, et les coquilles (10) présentant pendant leur utilisation des flasques longitudinaux (17, 19) se faisant face par paire et fixables sous pression l'un contre l'autre, sachant que les coquilles (10) présentent contre leurs surfaces intérieures (15) au moins un conducteur continu (21) agencé en spires (25) et chauffable électriquement, et que les spires (25) du conducteur (21) circulent d'une part contre les surfaces intérieures (15) des coquilles seulement dans les zones semi-annulaires (12, 12') situées respectivement aux deux extrémités (31, 31') de la coquille (30), et d'autre part aussi entre ces deux zones semi-annulaires (12, 12'), dans un ruban plat (13),
**caractérisée en ce que**
les coquilles (10) ont une configuration similaire et/ou identique quant à leur forme et à l'agencement du conducteur (21), et que ces coquilles (10) se trouvent dans des positions se faisant face lorsqu'utilisées par paires dans la bride, et que le ruban plat (13) ne figure que contre la surface intérieure (32) d'un flasque longitudinal (17), et que des branchements électriques (18, 28) sont présents, formés contre le côté extérieur (14) de chaque coquille (10), sachant qu'une partie de la section (22) du conducteur (21) fait saillie hors de la surface de contact (15, 32) des zones semi-annulaires (12, 12') côté coquille et du ruban (13) côté flasque longitudinal, et qu'une jonction par adhérence des formes s'établît entre le conducteur (21) et le matériau de la coquille (10).

2. Bride selon la revendication 1, **caractérisée en ce que** le conducteur (21) a été préformé pour se présenter comme un méandre plat (23), et qu'il forme ainsi un serpentin chauffant (20) en forme de méandre, dont les spires (25) circulent dans les zones semi-circulaires (12, 12') côté coquille, et dans le ruban (13) côté flasque longitudinal, sachant qu'un côté large (29) du méandre (23) se trouve agencé dans les surfaces de contact (15, 52).

3. Bride selon la revendication 1, **caractérisée en ce que** le serpentin chauffant (20) en forme de méandre a été posé sous forme de spires (25) et intégré ensuite dans un produit de départ en plastique, sachant que ce produit de départ est agencé contre la surface intérieure de la coquille (15) et contre la surface intérieure (32) d'un flasque longitudinal (17), et qu'il s'unit de façon indissociable avec le plastique (11) de la coquille (10) lors de la fabrication de cette dernière.

4. Bride selon la revendication 2 ou 3, **caractérisée en ce que** les spires (25) du serpentin chauffant (20) se composent de segments (26) essentiellement linéaires et de coudes (27) unissant les segments (26) de spire voisins, sachant que les segments (26) de spire situés dans la zone semi-annulaire (12, 12') circulent selon des plans radiaux parallèles, tandis que les segments de spire (26) situés dans le flasque longitudinal (17) sont disposés sur un plan axial conjoint.
